# EUROPÄISCHE PATENTSCHRIFT

(11) **EP 0 401 680 B1**
(45) Veröffentlichungstag und Bekanntmachung des Hinweises auf die Patenterteilung: **01.12.1993**
(21) Anmeldenummer: 90110340.8
(22) Anmeldetag: 31.05.1990
(51) Int. Cl.: H02K 21/24, B62J 6/12

(54) **Stromversorgungseinrichtung für Fahrräder**
Current supply device for bicycles
Dispositif d'alimentation de courant pour bicyclettes

(30) Priorität: 03.06.1989 DE 3918166
(43) Veröffentlichungstag der Anmeldung: 12.12.1990
(73) Patentinhaber: Schlüter, Gerd, D-24146 Kiel (DE); Schröder, Georg, D-25588 Oldendorf (DE); Lipski, Hans-Jürgen, D-22761 Hamburg (DE)
(72) Erfinder: Schlüter, Gerd, D-24146 Kiel (DE); Schröder, Georg, D-25588 Oldendorf (DE); Lipski, Hans-Jürgen, D-22761 Hamburg (DE)
(74) Vertreter: Meyer, Ludgerus A., Dipl.-Ing.

(56) Entgegenhaltungen:
- EP-A- 0 133 571
- DE-A- 3 126 150
- FR-A- 856 493
- FR-A- 2 606 951
- GB-A- 1 132 949

## Beschreibung

Die Erfindung betrifft eine Stromversorgungseinrichtung für Fahrräder nach dem Oberbegriff des Anspruchs 1.

Üblicherweise sind Fahrraddynamos als Wechselspannungsgeneratoren ausgebildet, die eine fest angeordnete Spule aufweisen, in die von drehenden Magneten ein Magnetfeld induziert wird. Diese Dynamos weisen, insbesondere wenn sie mit einer Reibrolle versehen sind, einen sehr schlechten Wirkungsgrad auf. Dies erfordert eine erhöhte aufzubringende Leistung des Fahrradfahrers.

Aus der DE PS 37 03 523 ist eine Stromversorgungseinrichtung für Fahrräder oder dergleichen mit einem Generator bekannt, der einen scheibenförmigen Läufer und mehrere in Achsrichtung des Läufers magnetisierte Dauermagnete aufweist, die mit abwechselnder Polarität in einer nichtmagnetischen Scheibe angeordnet sind. Der Läufer ist dabei als kupferkaschierter isolierender Träger ausgebildet, von dem die erzeugte Generatorspannung über Kontaktbürsten abnehmbar ist. Die Anschlüsse führen auf einen parallel zuschaltbaren Akkumulator, an den ein oder mehrere zuschaltbare Verbraucher angeschlossen sind.

Der Nachteil dieser Stromversorgungseinrichtung liegt insbesondere darin, daß Stromabnehmer vorgesehen sind, die im Dauerbetrieb zu Verschleiß und einem späteren Ausfall führen können.

Eine aus dem DE GM 1 826 690 bekannte elektrische Maschine mit Erregung durch Permanentmagnete bezieht sich nicht auf eine Stromversorgungseinrichtung für Fahrräder. Vielmehr handelt es sich bei der Maschine, soweit es sich um einen Generator mit auf der feststehenden Welle angeordnetem Anker handelt, um eine Ausführung, die Leistungen zwischen 100 und 500 W bei Frequenzen zwischen 400 - 2000 Hz erzeugt. Explizit ist eine Autolichtmaschine angegeben. Die Magnete sind entweder in Schutzrohren gehalten oder an den Wänden von Graugußlagerschilden angeklebt. Die besonderen Probleme bei Fahrrädern, nämlich die Bereitstellung ausreichender Spannung bei sehr niedrigen Drehzahlen sowie die Vermeidung von Verlusten sind in dieser Druckschrift nicht angesprochen.

In der FR-A 856 493 wird ein Fahrraddynamo mit einer feststehenden Achse offenbart, auf der eine Platte angeordnet ist, die an ihrem Umfang Spulenwindungen trägt. Die Spulen sind als konzentrisch gewickelte Einzelspulen ausgebildet, die zweiphasig aufgebaut sind und deren einer Anschluß an Masse angelegt ist, während der andere Anschluß durch eine Bohrung der Achse aus dem Generator herausführt. Die Magnete sind an den Seitenwanden der Nabe gehalten. Die Ausbildung konzentrisch gewickelter Einzelspulen auf einem plattenförmigen Halter ist mit hohem Aufwand verbunden und führt bei dem in einem Fahrrad vorhandenen geringen Drehzahlen zu einer starken Welligkeit des erzeugten Stromes. Aufgrund der Art des Aufbaus dieses Gegenstands können auch nur geringe Leistungen erzielt werden.

Aus der EP 133 571 ist ein kompliziert aufgebauter Generator bekannt, der einen scheibenförmigen Anker enthält. Dieser Anker ist jedoch in einem feststehenden Gehäuse angeordnet. Die Anschlüsse des Ankers führen nach außen. Die vorgesehenen Magnete sind auf der drehenden Welle des Generators angeordnet. Damit scheidet diese Anwendung für den Ersatz in der Radnabe eines Fahrrades aus, da dessen Achse feststeht.

Der Erfindung liegt die Aufgabe zugrunde, eine Stromversorgungseinrichtung für Fahrräder anzugeben, die auch bei niedrigen Drehzahlen einen hohen Wirkungsgrad erreichen läßt, geringe Verluste aufweist und einfach aufgebaut ist.

Diese Aufgabe wird erfindungsgemäß durch die Merkmale des Anspruchs 1 gelöst. Vorteilhafte Weiterbildungen der Erfindung sind in Unteransprüchen angegeben.

Die erfindungsgemäße Einrichtung läßt sich mit einfachsten Mitteln aufbauen. Aufgrund der starren Befestigung des Ankers auf der Welle können die Anschlüsse der Leiterbahnen auf einfache Weise durch eine Bohrung der Welle nach außen geführt werden. Das Gehäuse des Generators kann beidseitig auf der Welle gelagert sein und damit hermetisch abgedichtet sein. Da keinerlei Verschleiß im Generator auftreten kann, ist es nicht notwendig, eine mögliche Zerlegung des Generators vorzusehen.

Die Leiterbahnen können auf dem Läufer einseitig oder beidseitig aufgebracht sein. Die die Magnetisierung bewirkenden Magnete können in scheibenförmigen Haltern ein- oder beidseitig des Ankers angeordnet sein, wobei die Halter vorzugsweise in Nuten des Außenumfangs des Gehäuses aufgenommen sind. Auf die zusätzlichen Halter kann auch verzichtet werden, wenn die Magnete unmittelbar in den seitlichen Außenwänden des Gehäuses befestigt sind.

Anstelle der Verwendung eines einzigen Ankers auf der Welle können auch mehrere hintereinander gestaffelte Anker verwendet werden, wobei sich die erzeugten Spannungen bei entsprechender Beschaltung der Anschlüsse addieren. Zwischen einzelnen Ankerscheiben können auch zusätzliche drehende Magnete vorgesehen sein, die in Haltern festgelegt sind, die wiederum am Außenumfang des Gehäuses des Generators gehalten sind.

Die Erfindung eignet sich insbesonders für die Stromversorgung von Fahrrädern.

Die Kombination der Merkmale des Anspruchs 1 ermöglicht einen besonderen Aufbau eines Fahrradgenerators, der gleichwohl bei sehr niedriger Drehzahl eine hohe Spannung liefert, und dessen Verluste, insbesondere auch im Gleichstrombetrieb, sehr niedrig sind.

Die Erfindung wird nachstehend anhand eines Ausführungsbeispiels näher erläutert:

Es zeigen:
- Fig. 1: eine Querschnittsansicht der Erfindung,
- Fig. 2 a: die Ansicht eines Leiterbahnenverlaufs eines Läufes in abgewickelter Ansicht,

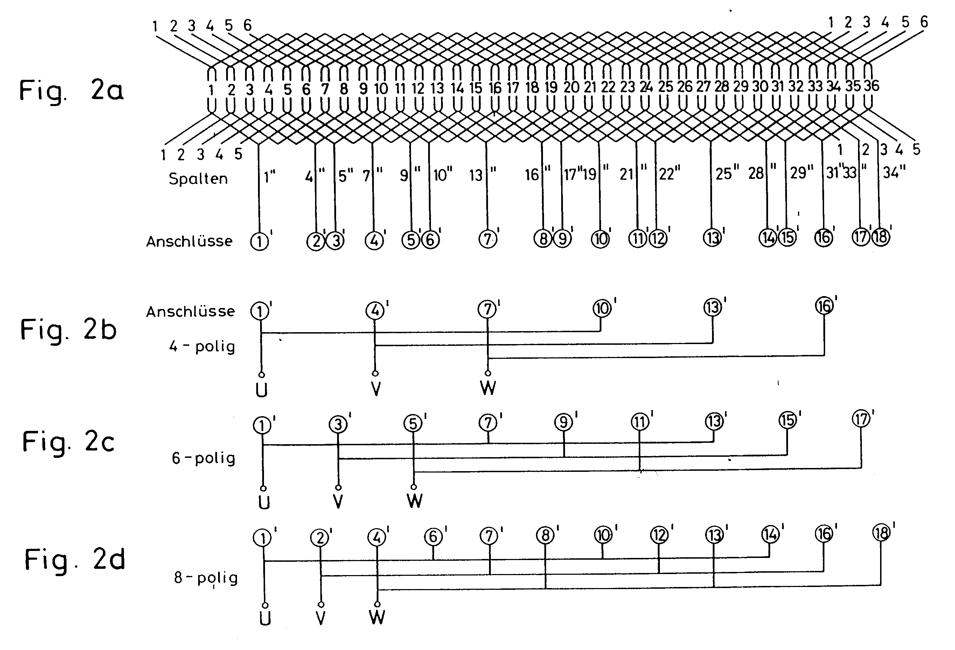

- Fig. 2 b - d: Anschlußschemata für eine verschiedene Polzahl,
- Fig. 3: eine Gleichrichter Schaltung.

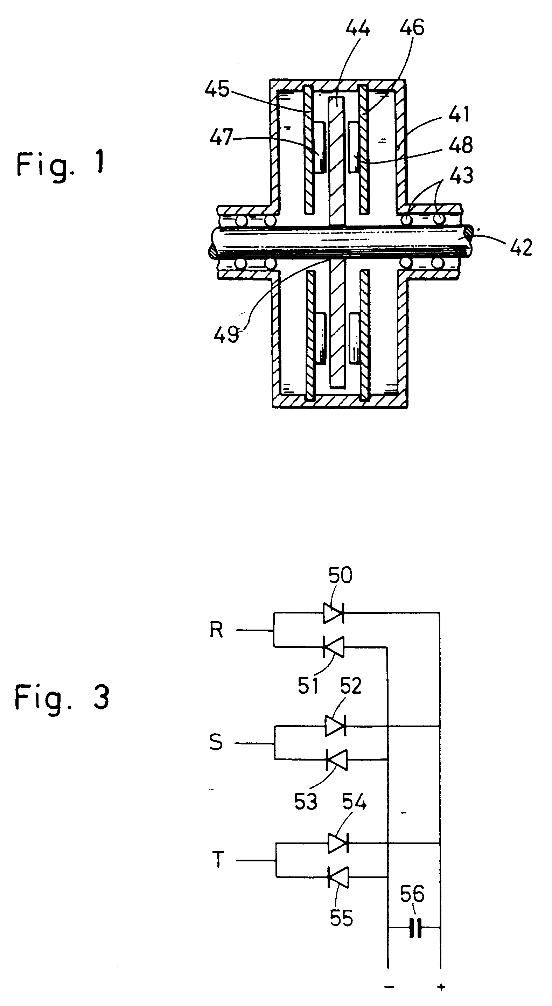

Fig. 1 zeigt ein Ausführungsbeispiel der Erfindung in Querschnittsansicht. Es ist eine Welle 42 vorgesehen, die die Radwelle eines Fahrrades ist. Diese Welle ist feststehend angeordnet. Über Lager 43 ist das Gehäuse 41 drehbar auf der feststehenden Welle 42 gelagert. Das Gehäuse ist mit den Speichen bzw. der Felge des Rades verbunden. Innerhalb des Gehäuses 41 sind zwei senkrecht zur Welle 42 angeordnete Halter 45 und 46 vorgesehen, die am inneren Außenumfang in Nuten des Gehäuses 41 aufgenommen sind. Die Halter 45 und 46 enden auf ihrer Innenseite kurz vor der Welle 42, so daß diese zusammen mit dem Gehäuse 41 gegenüber der Welle 42 drehbar sind.

Die Halter 45 und 46 nehmen die Magnete 47 und 48 auf, die mit wechselnder Polarität einander gegenüber gerichtet sind. Zwischen den mitdrehenden Magneten 47 und 48 befindet sich die Ankerscheibe 44, die mit der Welle 42 an der Stelle 49 fest verbunden ist. Der Eisenrückschluß der Magnete 47 und 48 kann über die Halter 45 und 46 und einen Teil des Gehäuses 41 erfolgen.

Anstelle der zwei zusätzlichen Halter 45 und 46 können die Magnete 47 und 48 auch unmittelbar an den Gehäuseseitenwänden des Gehäuses 41 angebracht werden, z.b. über Halter, Schrauben oder durch Kleben. Dadurch können die Scheiben 45 und 46 entfallen und es läßt sich ein sehr schmaler Aufbau des Generators erreichen. Die Magnete können auch als magnetische Formmasse ausgebildet sein (Herstellerbezeichnung VESTAMID), die der Innenform der Nabe angepaßt werden kann.

Erfindungsgemäß sind die Leiterbahnen auf dem Anker 44 in Drehstromwicklung ausgeführt. Den Aufbau einer entsprechenden Wicklung zeigt Fig. 2a, die eine mehrpolige Verschaltung der einzelnen Leiterbahnen ermöglicht. Es sind insgesamt 36 Spalten vorgesehen, die jeweils zu Anschlüssen führen. Durch Wahl bestimmter Anschlüsse kann z.B. eine vierpolige Leiterbahnführung entsprechend Fig. 2b, eine sechspolige entsprechend Fig. 2c oder eine achtpolige entsprechend Fig. 2d erreicht werden. Die zusammengeschalteten Anschlüsse U, V, W werden einer Gleichrichterschaltung entsprechend Fig. 3 zugeführt, die sowohl sternförmig als auch dreieckförmig aufgebaut sein kann. In der sternförmigen Anordnung sind die Dioden 50 - 56 vorgesehen, die vorzugsweise in Germaniumtechnik ausgebildet sind, um geringe Durchlaßspannungen zu erreichen. Zur Glättung des entstehenden Drehstroms kann ein Kondensator 36 vorgesehen sein.

Vorzugsweise kann auch eine Spannungsverdopplerschaltung verwendet werden.

### Bezugszeichenliste

- 1 - 6: Verbindungen
- 1′ - 18′: Anschlüsse
- 1'' - 34'': Spulen
- 41: Gehäuse
- 42: Welle
- 43: Lager
- 44: Anker
- 45: Halterung
- 46: Halterung
- 47: Magnet
- 48: Magnet
- 49: Verbindung
- 50 - 55: Dioden
- 56: Kondensator

## Patentansprüche

1. Stromversorgungseinrichtung für Fahrräder, mit einem in einer Radnabe angeordneten Generator, der einen feststehenden scheibenförmigen Anker (44) und mehrere in Axialrichtung des Ankers (44) magnetisierte, um die Achse des Ankers umlaufende Dauermagnete (47, 48) aufweist, die mit abwechselnder Polarität auf einem Kreisumfang des Generators angeordnet sind und mit ihrem Magnetfluß die Windungen des Ankers durchdringen, dessen Anschlüsse durch eine Bohrung der Achse aus dem Generator führen, dadurch gekennzeichnet, daß der Anker (44) als kupferkaschierter isolierender Träger mit darauf befindlichen Leiterbahnen als mehrpolige Drehstromwicklung ausgebildet ist, daß die Magnete auf dem inneren Umfang der drehenden, geschlossenen Fahrradnabe (41) gehalten sind, und daß die Anschlüsse der Drehstromwicklung auf eine Germaniumdioden enthaltende Drehstromgleichrichterschaltung (50 - 56) führen.

2. Einrichtung nach Anspruch 1, dadurch gekennzeichnet, daß scheibenförmige Halter (45, 46) zur Aufnahme der Magnete vorgesehen sind und an ihrem Umfang in umlaufenden Nuten der Nabe (41) aufgenommen sind.

3. Einrichtung nach Anspruch 1, dadurch gekennzeichnet, daß die Magnete (47, 48) unmittelbar in Ausnehmungen der Seitenwände der Nabe aufgenommen sind.

4. Einrichtung nach einem oder mehreren der Ansprüche 1 - 3, dadurch gekennzeichnet, daß der Anker (44) aus mehreren auf der feststehenden Achse hintereinander gestaffelten scheibenförmigen mit Leiterbahnen versehenen Trägern besteht.

5. Einrichtung nach Anspruch 4, dadurch gekennzeichnet, daß jeweils zwischen zwei Trägern auf einem Kreisumfang angeordnete Magnete vorgesehen sind.

## Claims

1. A power-supply device for cycles, with a generator arranged in a hub, which generator has a fixed disk-shaped armature (44) and several magnetised permanent magnets (47,48) revolving about the axis of the armature in axial direction of the armature (44) which are arranged with alternating polarity on a circumference of the generator and penetrate, with their magnetic flux, the windings of the armature, the connections of which lead through a bore of the axis out of the generator, characterized in that the armature (44) is formed as a copper-clad insulating carrier with conductor lines located thereon as a multipole three-phase winding, such that the magnets are held on the inner periphery of the rotating, closed hubs (41) and such that the connections of the three-phase winding lead to a three-phase rectifier circuit (50-56) containing germanium diodes.

2. Device according to claim 1, characterized in that disk-shaped holders (45,46) are provided to accommodate the magnets and are accommodated at their circumference in revolving grooves of the hub (41).

3. Device according to claim 1, characterized in that the magnets (47,48) are accommodated directly in recesses of the side-walls of the hub.

4. Device according to one or more of claims 1-3, characterized in that the armature (44) consists of several disk-shaped carriers, provided with conductor lines, which are staggered behind one another on the fixed axis.

5. Device according to claim 4, characterized in that in each case magnets are provided between two carriers arranged on a circumference.

## Revendications

1. Dispositif d'alimentation de courant pour bicyclettes, avec un générateur disposé dans un moyeu de roue, présentant un induit (44) discoïde stationnaire et plusieurs aimants permanents (47,48), magnétisés dans la direction axiale de l'induit (44), tournant autour de l'axe de l'induit, disposés avec une polarité alternante sur la circonférence du générateur et traversant par leur flux magnétique les bobinages de l'induit, dont les raccordements mènent hors du générateur, à travers un perçage ménagé dans l'axe, caractérisé en ce que l'induit (44) est réalisé sous forme de support isolant scellé au cuivre, les pistes conductrices se trouvant par dessus étant réalisées sous forme de bobinage à courant alternatif multipolaire, en ce que les aimants sont maintenus sur la périphérie intérieure du moyeu de bicyclette (41) tournant, fermé, et en ce que les raccordements du bobinage à courant alternatif mènent à un circuit redresseur de courant alternatif (50 à 56), contenant des diodes au germanium.

2. Dispositif selon la revendication 1, caractérisé en ce que des supports discoïdes (45, 46) sont prévus pour recevoir les aimants et sont logés à leur périphérie dans des gorges circulaires ménagées dans le moyeu (41)..

3. Dispositif selon la revendication 1, caractérisé en ce que les aimants (47, 48) sont logés directement dans des évidements ménagés dans les parois latérales du moyeu.

4. Dispositif selon l'une des revendications 1 à 3, caractérisé en ce que l'induit (44) est composé de plusieurs supports discoïdes échelonnés les uns derrière les autres sur l'axe stationnaire et pourvus de pistes conductrices.

5. Dispositif selon la revendication 4, caractérisé en ce que sont prévus des aimants disposés chacun entre deux supports sur une périphérie de cercle.
